# EUROPEAN PATENT APPLICATION

(11) **EP 4 375 930 A1**
(43) Date of publication of application: **29.05.2024**
(21) Application number: 23191559.6
(22) Date of filing: 15.08.2023
(51) Int. Cl.: G06T 7/73

(54) **POSITION MEASURING PROGRAM, INFORMATION PROCESSING DEVICE, AND POSITION MEASURING METHOD**

(30) Priority: 25.11.2022 JP 2022188471
(71) Applicant: FUJITSU LIMITED, Kawasaki-shi, Kanagawa 211-8588 (JP)
(72) Inventor: IKKAKU, Kento, Kawasaki-shi, 211-8588 (JP); ISHII, Daisuke, Kawasaki-shi, 211-8588 (JP)
(74) Representative: Haseltine Lake Kempner LLP

(57) **Abstract**

A position measuring program including instructions which cause a computer to perform processing including: identifying a first position of a first target in image data; identifying specific identification information and a specific type corresponding to a specific position where a positional relationship with the first position satisfies a first condition, by referring to a first storage device storing a position of each measurement target, identification information on the imaging device having captured the image data, and a type of each target; identifying a specific feature point group corresponding to the specific identification information and the specific type, by referring to a second storage device storing the identification information on an imaging device having captured the image data, the type of each target, and a feature point group of each target in the image data; and estimating a posture of the first target from the specific feature point group.

## Description

### FIELD

The embodiment discussed herein is related to a position measuring program, an information processing device, and a position measuring method.

### BACKGROUND

Information processing systems that calculate, from video data, the postures of measurement targets (for example, persons or objects) appearing in the video data have been released these days. In such an information processing system, for example, a process of analyzing video data acquired in real time from an imaging device such as a camera (hereinafter also referred to simply as an imaging device) is performed to identify the position and the posture of a measurement target.

Japanese Laid-open Patent Publication Nos. 2003-256806 and 2018-147241 are disclosed as related art.

### SUMMARY

### TECHNICAL PROBLEM

In the information processing system as described above, for example, a plurality of pieces of image data is obtained beforehand by imaging a measurement target from a plurality of directions, and a feature point group of the measurement target appearing in each piece of the image data is identified for each acquired piece of the plurality of pieces of image data. Then, in the information processing system, for example, a combination of the type of the measurement target and the feature point group of the measurement target (this combination will be hereinafter also referred to as a combination of storage targets) is stored into a storage device.

After that, in a case where video data is received from the imaging device, for example, the information processing system estimates the posture of a measurement target appearing in the received video data, using the feature point group corresponding to a combination of the type and the feature point group of the measurement target appearing in the image data constituting the received video data (this combination will be hereinafter also referred to as a combination of estimation targets) among the feature point groups stored in the storage device.

In the information processing system as described above, however, in a case where the number of combinations of storage targets is large, for example, the number of times matching with a combination of estimation targets is performed becomes larger. Therefore, in the information processing system in this case, for example, the processing load that accompanies the estimation of the posture of a measurement target is large, and the time required for estimating the posture of a measurement target is long.

On the other hand, in a case where the number of the types of measurement targets and the number of feature point groups of the measurement targets are reduced, for example, in the information processing system, the processing load that accompanies estimation of the posture of a measurement target can be reduced. In the information processing system in this case, however, there is a possibility that the accuracy of estimation of measurement target postures might decrease, for example.

Therefore, it is desirable to provide a position measuring program, an information processing device, and a position measuring method capable of reducing the processing load that accompanies estimation of a posture of a measurement target.

### SOLUTION TO PROBLEM

According to an embodiment of one aspect of the invention, there is provided a position measuring program including instructions which when executed by a computer, cause the computer to perform processing including: identifying a first position of a first measurement target in image data received from an imaging device; identifying specific identification information and a specific type that correspond to a specific position at which a positional relationship with the first position satisfies a first condition, by referring to a first storage device coupled to the computer, the first storage device being configured to store a position of each measurement target, identification information on the imaging device that has captured the image data in which each measurement target appears, and a type of each measurement target, in association with each other; identifying a specific feature point group that correspond(s) to the identified specific identification information and the identified specific type, by referring to a second storage device coupled to the computer, the second storage device being configured to store the identification information on the imaging device that has captured the image data in which each measurement target appears, the type of each measurement target, and a feature point group of each measurement target in the image data in which each measurement target appears, in association with each other; and estimating a posture of the first measurement target from the identified specific feature point group.

### ADVANTAGEOUS EFFECTS OF INVENTION

According to one aspect, it is possible to reduce the processing load that accompanies estimation of a posture of a measurement target.

### BRIEF DESCRIPTION OF DRAWINGS

The invention is described, by way of example only, with reference to the following drawings, in which:
FIG. 1 is a diagram for explaining the configuration of an information processing system 10;
FIG. 2 is a diagram for explaining the configuration of the information processing system 10;
FIG. 3 is a diagram for explaining the hardware configuration of an information processing device 1;
FIG. 4 is a diagram for explaining functions of the information processing device 1 according to a first embodiment;
FIG. 5 is a flowchart for explaining an outline of a position measurement process according to the first embodiment;
FIG. 6 is a flowchart for specifically explaining the position measurement process according to the first embodiment;
FIG. 7 is a flowchart for specifically explaining the position measurement process according to the first embodiment;
FIG. 8 is a flowchart for specifically explaining the position measurement process according to the first embodiment;
FIG. 9 is a flowchart for specifically explaining the position measurement process according to the first embodiment;
FIG. 10 is a table for explaining a specific example of feature point group information 133;
FIG. 11 is a table for explaining a specific example of detection result information 131a;
FIG. 12 is a table for explaining a specific example of past result information 132;
FIG. 13 is a table for explaining a specific example of imaging position information 134;
FIG. 14 is a table for explaining a specific example of first prospect information 135;
FIG. 15 is a table for explaining a specific example of second prospect information 136;
FIG. 16 is a table for explaining a specific example of estimation result information 137;
FIG. 17 is a table for explaining a specific example of past result information 132; and
FIG. 18 is a table for explaining details of the position measurement process according to the first embodiment.

### DESCRIPTION OF EMBODIMENTS

[Configuration of an Information Processing System According to a First Embodiment]

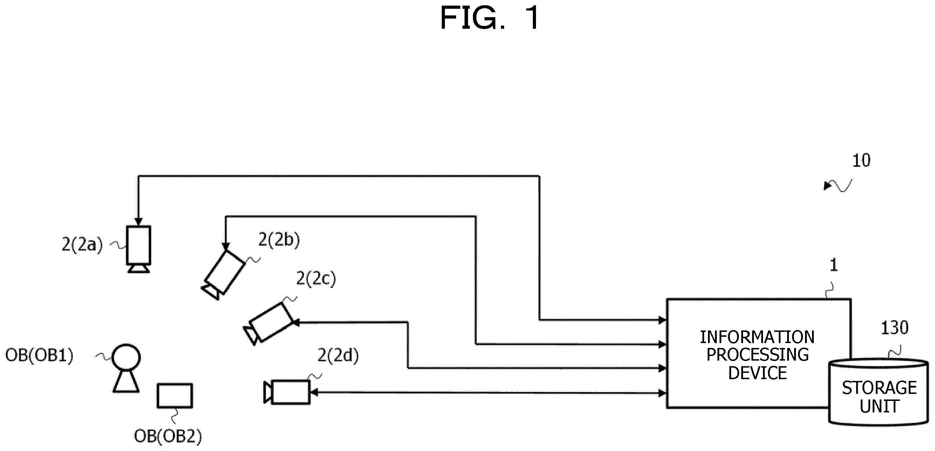

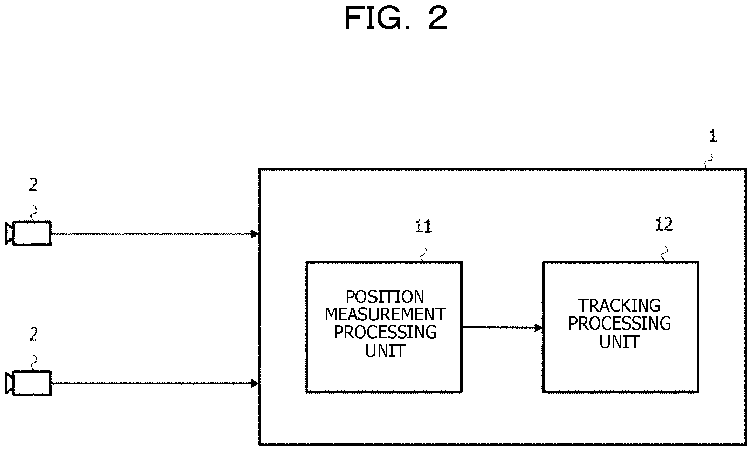

First, the configuration of an information processing system 10 is described. FIGS. 1 and 2 are diagrams for explaining the configuration of the information processing system 10.

The information processing system 10 illustrated in FIG. 1 includes, for example, an information processing device 1, an imaging device 2a, an imaging device 2b, an imaging device 2c, and an imaging device 2d. Hereinafter, the imaging device 2a, the imaging device 2b, the imaging device 2c, and the imaging device 2d will be also collectively referred to simply as the imaging devices 2. Note that a case where the information processing system 10 includes four imaging devices 2 is described below, but the information processing system 10 may include less than or more than four imaging devices 2, for example.

The imaging devices 2 are, for example, stationary cameras installed in a room of a factory or the like, and continuously capture images of the imageable range. That is, the imaging devices 2 capture, for example, images of measurement targets OB such as a person OB1 and an object OB2 included in the imageable range. Then, the imaging devices 2 then transmit, for example, the captured video data (the respective frames constituting the video data) to the information processing device 1 in real time.

Note that the imaging devices 2 may capture, for example, 10 (fps) video data and transmit the video data to the information processing device 1. That is, the imaging devices 2 may transmit, for example, a frame (hereinafter also referred to as image data) to the information processing device 1 every 100 (ms). Further, a position in the image data will be hereinafter also referred to simply as a position.

The information processing device 1 is, for example, one or more physical machines, or one or more virtual machines. Then, as illustrated in FIG. 2, the information processing device 1 functions as, for example, a position measurement processing unit 11 and a tracking processing unit 12.

The position measurement processing unit 11 performs a process of calculating the position and the posture of the measurement targets OB appearing in the respective pieces of the image data captured by the imaging devices 2 (this process will be hereinafter also referred to as the position measurement process), for example.

Specifically, in the position measurement process, the information processing device 1 according to this embodiment identifies the position (hereinafter also referred to as the first position) of a measurement target OB (hereinafter also referred to as the first measurement target OB) in image data received from an imaging device 2, for example. Then, the information processing device 1 then refers to a storage unit 130 that stores information (hereinafter also referred to as the past result information) in which the positions of the respective measurement targets OB, identification information about the imaging devices 2 that have captured the image data in which the respective measurement targets OB appear, and the types of the respective measurement targets OB are associated with each other, for example, and identifies identification information (hereinafter also referred to as the specific identification information) and the type (hereinafter also referred to as the specific type) corresponding to the position (hereinafter also referred to as the specific position) at which the positional relationship with the first position satisfies a condition (hereinafter also referred to as the first condition).

Subsequently, the information processing device 1 refers to the storage unit 130 that stores information (hereinafter also referred to as the feature point group information) in which identification information about the imaging devices 2 that have captured image data in which the respective measurement targets OB appear, the types of the respective measurement targets OB, and feature point groups of the respective measurement targets OB in the image data in which the respective measurement targets OB appear, are associated with each other, for example, and identifies the feature point group (hereinafter also referred to as the specific feature point group) corresponding to the specific identification information and the specific type. After that, the information processing device 1 estimates the posture of the first measurement target OB from the specific feature point group, for example.

That is, it can be determined that the position (for example, the current position) of the first measurement target OB is highly likely to be a position close to the position (for example, the previously estimated position) estimated in the past as the position of the first measurement target OB, in accordance with, for example, the operation speed of the first measurement target OB or the like.

Therefore, in a case where the posture of each measurement target OB is estimated, for example, the information processing device 1 according to this embodiment generates past result information by associating the identification information about the imaging devices 2 that have captured video data including the feature point groups used in estimating the postures of the respective measurement targets OB with the positions of the respective measurement targets OB and the types of the respective measurement targets OB, and accumulates the past result information in the storage unit 130.

Then, in a case where the posture of the first measurement target OB is estimated, for example, the information processing device 1 refers to the storage unit 130 storing the past result information, and identifies the imaging device 2 corresponding to the position at which the positional relationship with the position of the first measurement target OB satisfies the first condition and the type of the first measurement target OB, to identify the imaging device 2 corresponding to the feature point group used in estimating the posture of the first measurement target OB in the past (at the time of the previous estimation, for example) and the type of the first measurement target OB. After that, the information processing device 1 refers to the storage unit 130 storing the feature point group information, for example, and identifies the feature point group corresponding to the identified imaging device 2 and the identified type of the first measurement target OB. Further, the information processing device 1 estimates, for example, the posture of the first measurement target OB, using the identified feature point group.

As a result, when estimating the posture of the first measurement target OB, for example, the information processing device 1 according to this embodiment no longer needs to match the combination of the type of the first measurement target OB and the feature point group with all the combinations of the types of the measurement targets OB and the feature point groups included in the feature point group information. Thus, the information processing device 1 can reduce the processing load accompanying the estimation of the posture of the first measurement target OB.

Note that both the past result information and the feature point group information may be stored in the same storage unit (storage unit 130), or may be stored in different storage units. Hereinafter, the storage unit that stores the past result information will be also referred to as the first storage unit, and the storage unit that stores the feature point group information will be also referred to as the second storage unit.

Also, in the description below, a case where the identification information about the imaging device 2 corresponding to the feature point group (which is the feature point group used when a position measurement process was performed last time) used when the posture of the first measurement target OB was estimated last time in the position measurement process is explained, but embodiments are not limited to this. Specifically, in the position measurement process, for example, the information processing device 1 may identify the identification information about the imaging device 2 corresponding to the feature point group used when the posture of the first measurement target OB was estimated several times before (one time before the last time, for example).

Referring back to FIG. 2, the position measurement processing unit 11 further calculates, for example, the real-space three-dimensional coordinates of the measurement targets OB appearing in the respective pieces of image data captured by the imaging devices 2.

Furthermore, the tracking processing unit 12 tracks the measurement targets OB by performing a process of predicting the three-dimensional coordinates of the measurement targets OB at the next prediction timing, using, for example, the three-dimensional coordinates calculated by the position measurement processing unit 11. Prediction timings are, for example, timings not synchronized with the timings of transmission of image data from the position measurement processing unit 11, and are timings at intervals of a predetermined time such as 200 (ms). That is, every time the position measurement processing unit 11 calculates three-dimensional coordinates, the tracking processing unit 12 predicts the three-dimensional coordinates of the measurement targets OB at the next prediction timing, using the calculated three-dimensional coordinates.

### [Hardware Configuration of the Information Processing Device]

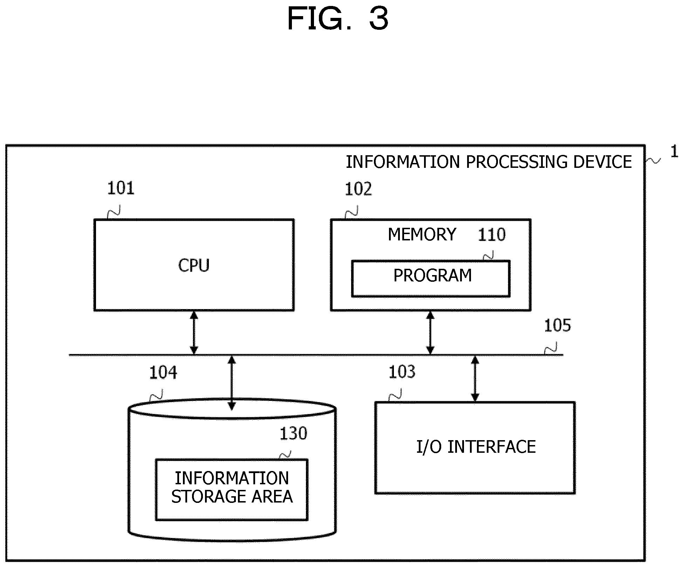

Next, the hardware configuration of the information processing device 1 is described. FIG. 3 is a diagram for explaining the hardware configuration of the information processing device 1.

As illustrated in FIG. 3, the information processing device 1 includes, for example, a central processing unit (CPU) 101 as a processor, a memory 102, a communication device (input/output (I/O) interface) 103, and a storage 104. The respective components are coupled to each other via a bus 105.

The storage 104 includes, for example, a program storage area (not illustrated) that stores a program 110 for performing a position measurement process. Also, the storage 104 includes, for example, the storage unit 130 (hereinafter also referred to as the information storage area 130) that stores information to be used when a position measurement process is performed. Note that the storage 104 may be a hard disk drive (HDD) or a solid state drive (SSD), for example.

The CPU 101 executes, for example, the program 110 loaded from the storage 104 into the memory 102, to perform a position measurement process.

Meanwhile, the communication device 103 communicates with, for example, the imaging devices 2 via a network such as the Internet.

### [Functions of the Information Processing Device According to the First Embodiment]

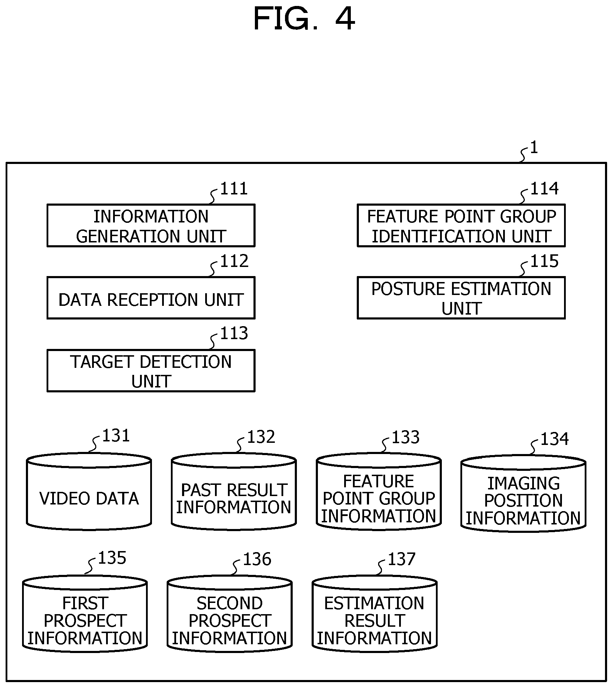

Next, the functions of the information processing device 1 according to the first embodiment are described. FIG. 4 is a diagram for explaining the functions of the information processing device 1 according to the first embodiment.

As illustrated in FIG. 4, as the hardware such as the CPU 101 and the memory 102 cooperate organically with the program 110, the information processing device 1 achieves various functions including, for example, an information generation unit 111, a data reception unit 112, a target detection unit 113, a feature point group identification unit 114, and a posture estimation unit 115 as the functions of the position measurement processing unit 11.

Also, as illustrated in FIG. 4, for example, video data 131, past result information 132, feature point group information 133, imaging position information 134, first prospect information 135, second prospect information 136, and estimation result information 137 are stored in the information storage area 130.

The information generation unit 111 identifies the feature point groups and the types of the measurement targets OB appearing in the respective pieces of image data, for each piece of image data obtained by a plurality of imaging devices 2 capturing images of the respective measurement targets OB in a plurality of measurement targets OB, for example. Then, the information generation unit 111 then generates, for example, the feature point group information 133 including the combination of the identified feature point group and the identified type. The feature point group information 133 is, for example, information in which the identification information about the imaging devices 2 that have captured image data in which the respective measurement targets OB appear, the types of the respective measurement targets OB, and the feature point groups of the respective measurement targets OB in the image data in which the respective measurement targets OB appear, are associated with each other. After that, the information generation unit 111 stores the generated feature point group information 133, for example, into the information storage area 130.

Note that, although a case where the respective imaging devices 2 in the plurality of imaging devices 2 capture images of the respective measurement targets OB is described below, for example, one imaging device 2 may capture images of the respective measurement targets OB a plurality of times while changing the imaging position.

Also, a case where the feature point group information 133 is generated from image data captured by the imaging devices 2 is described below, but the information generation unit 111 may generate the feature point group information 133, using, for example, computer graphics (CG) data or assumed parameters. Specifically, the information generation unit 111 may generate the feature point group information 133 by further identifying the respective positions (for example, the positions of edges) of the measurement targets OB estimated from the shapes (for example, rectangular shapes) of the measurement targets OB as assumed parameters, for example, and then further identifying the respective feature points corresponding to the respective identified positions.

The data reception unit 112 acquires (receives) the video data 131 captured by the imaging devices 2, for example. Specifically, the data reception unit 112 sequentially receives, for example, image data (the image data forming the video data 131) sequentially transmitted by the imaging devices 2.

The target detection unit 113 detects, for example, the first measurement target OB appearing in the image data received by the data reception unit 112. Specifically, the target detection unit 113 identifies, for example, the first position of the first measurement target OB in the image data received by the data reception unit 112.

The feature point group identification unit 114 refers to, for example, the past result information 132 stored in the information storage area 130, and identifies the specific identification information and the specific type corresponding to a specific position at which the positional relationship with the first position identified by the target detection unit 113 satisfies the first condition. The past result information 132 is, for example, information in which the positions of the respective measurement targets OB, the identification information about the imaging devices 2 that have captured the image data in which the respective measurement targets OB appear, and the types of the respective measurement targets OB are associated with each other. Specifically, the feature point group identification unit 114 identifies, for example, the specific identification information and the specific type corresponding to a position at which the distance to the first position identified by the target detection unit 113 is equal to or shorter than a first threshold.

Also, the feature point group identification unit 114 refers to the feature point group information 133 stored in the information storage area 130, for example, and identifies the specific feature point group corresponding to the specific identification information and the specific type.

The posture estimation unit 115 estimates, for example, the posture of the first measurement target OB from the specific feature point group identified by the feature point group identification unit 114. The imaging position information 134, the first prospect information 135, the second prospect information 136, and the estimation result information 137 will be described later.

### [Outline of a Position Measurement Process According to the First Embodiment]

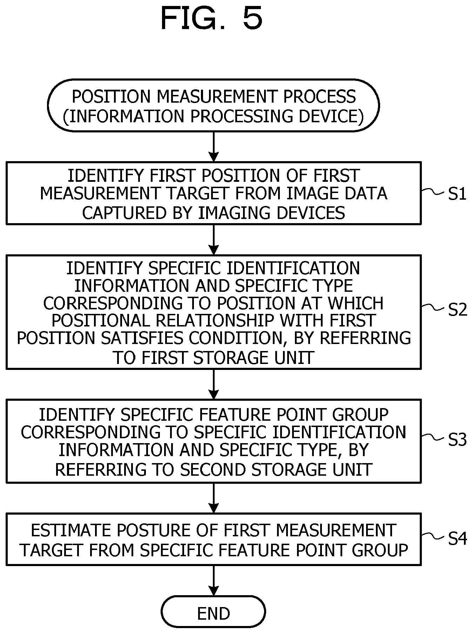

Next, an outline of the first embodiment is described. FIG. 5 is a flowchart for explaining an outline of a position measurement process according to the first embodiment.

As illustrated in FIG. 5, the target detection unit 113 identifies, for example, the position of the first measurement target OB appearing in the image data forming the video data 131 captured by the imaging devices 2 (S1). Specifically, the target detection unit 113 identifies, for example, the position of the first measurement target OB appearing in the image data included in the video data received by the data reception unit 112 from the imaging devices 2.

Then, the feature point group identification unit 114 identifies the specific identification information and the specific type corresponding to the specific position at which the positional relationship with the first position identified in the process in S1 satisfies the first condition, by referring to the past result information 132 stored in the information storage area 130, for example (S2).

Subsequently, the feature point group identification unit 114 identifies the specific feature point group corresponding to the specific identification information and the specific type identified in the process in S2, by referring to the feature point group information 133 stored in the information storage area 130, for example (S3).

The posture estimation unit 115 estimates, for example, the posture of the first measurement target OB from the specific feature point group identified in the process in S3 (S4).

As a result, when estimating the posture of the first measurement target OB, for example, the information processing device 1 according to this embodiment no longer needs to match the combination of the type of the first measurement target OB and the feature point group with all the combinations of the types of the measurement targets OB and the feature point groups included in the feature point group information. Thus, the information processing device 1 can reduce the processing load accompanying the estimation of the postures of the measurement targets OB.

### [Details of the Position Measurement Process According to the First Embodiment]

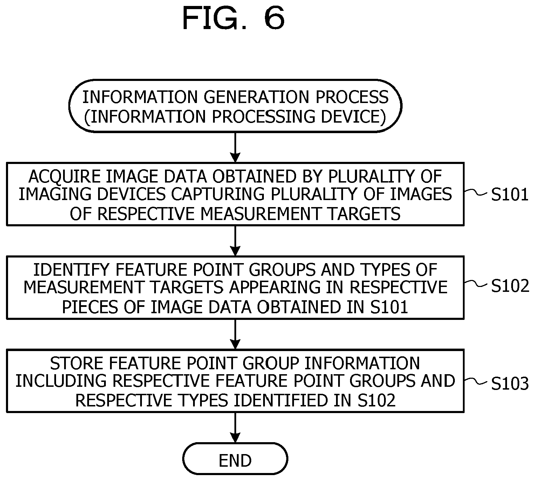

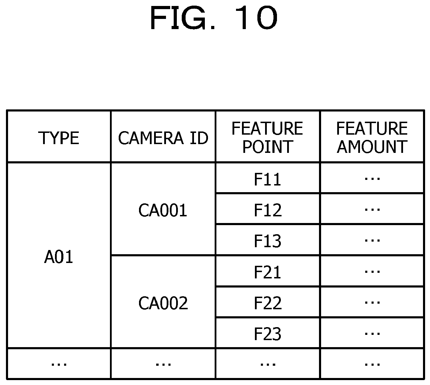

Next, details of the position measurement process according to the first embodiment are described. FIGS. 6 to 9 are flowcharts for explaining details of the position measurement process in the first embodiment. Further, FIGS. 10 to 18 are tables for explaining the details of the position measurement process according to the first embodiment.

### [Information Generation Process]

First, a process of generating the feature point group information 133 (this process will be hereinafter also referred to as the information generation process) in the position measurement process is described. FIG. 6 is a flowchart for explaining the information generation process.

As illustrated in FIG. 6, the information generation unit 111 acquires, for example, the respective pieces of image data obtained by the respective imaging devices 2 in a plurality of imaging devices 2 capturing images of the respective measurement targets OB in a plurality of measurement targets OB (S101).

Then, for each piece of the image data obtained in the process in S101, for example, the information generation unit 111 identifies the combination of the feature point group and the type of the measurement targets OB appearing in each piece of the image data (S102). Specifically, the information generation unit 111 may identify, for example, the angle, the gradient of luminance, and the like of the measurement targets OB appearing in the respective pieces of the image data as the feature point groups.

After that, the information generation unit 111 generates, for example, the feature point group information 133 including the respective combinations identified in the process in S102 (S103). Then, the information generation unit 111 then stores the generated feature point group information 133, for example, into the information storage area 130. In the description below, a specific example of the feature point group information 133 is explained.

### [Specific Example of the Feature Point Group Information]

FIG. 10 is a table for explaining a specific example of the feature point group information 133.

The feature point group information 133 illustrated in FIG. 10 includes items that are, for example, "type" in which the types of the respective measurement targets OB are set, and "camera ID" in which the identification information (hereinafter also referred to as the camera IDs) about the imaging devices 2 that have captured the image data in which the respective measurement targets OB appear, is set. Also, the feature point group information 133 illustrated in FIG. 10 includes items that are, for example, "feature point" in which the feature points included in the feature point groups of the respective measurement targets OB are set, and "feature amount" in which the feature amounts at the feature points included in the feature point groups of the respective measurement targets OB are set. Note that, in a case where one imaging device 2 images each measurement target OB a plurality of times while changing imaging positions, the identification information about each imaging position may be set in "camera ID", for example.

Specifically, in the feature point group information 133 illustrated in FIG. 10, "F11", "F12", and "F13" are set, for example, in "feature point" of the information in which "type" is "A01" and "camera ID" is "CA001" (the information in the first to third rows). That is, in the first to third rows in the feature point group information 133 illustrated in FIG. 10, for example, information is set regarding the feature point group of the measurement target OB whose "type" is "A01" among the feature point groups of the respective measurement targets OB imaged by the imaging device 2 whose "camera ID" is "CA001".

Also, in the feature point group information 133 illustrated in FIG. 10, "F21", "F22", and "F23" are set, for example, in "feature point" of the information in which "type" is "A01" and "camera ID" is "CA002" (the information in the fourth to sixth rows). That is, in the fourth to sixth rows in the feature point group information 133 illustrated in FIG. 10, for example, information is set regarding the feature point group of the measurement target OB whose "type" is "A01" among the feature point groups of the respective measurement targets OB imaged by the imaging device 2 whose "camera ID" is "CA002". Explanation of other information included in FIG. 10 is not made herein.

### [Main Process in the Position Measurement Process]

Next, the main process in the position measurement process is described.

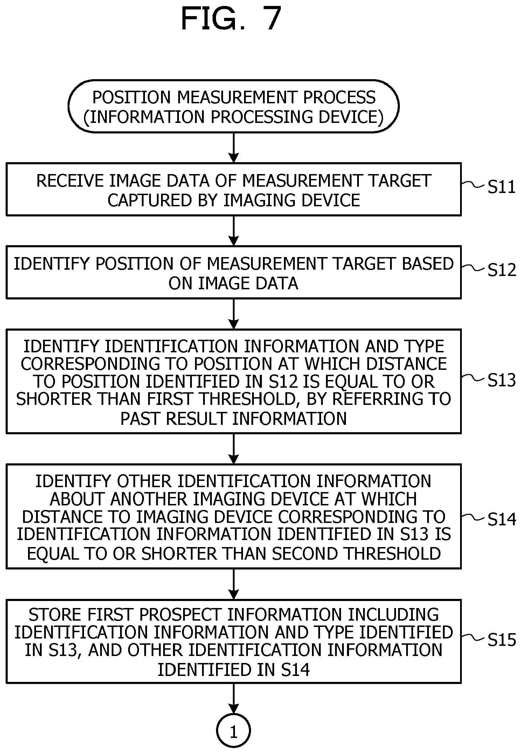

FIGS. 7 to 9 are flowcharts for explaining the main process in the position measurement process.

As illustrated in FIG. 7, the data reception unit 112 receives, for example, the image data constituting the video data 131 captured by an imaging device 2 (the image data transmitted by the imaging device 2) (S11).

Specifically, the data reception unit 112 receives, for example, the image data constituting the video data 131 captured by one imaging device 2 predetermined as the imaging device 2 that images the first measurement target OB.

Then, the target detection unit 113 then identifies, for example, the first position of the first measurement target OB in the image data received in the process in S11 (S12).

Specifically, the target detection unit 113 identifies, for example, the coordinates of the center position of the region (rectangular region) in which the first measurement target OB appear among the coordinates in the image data received in the process in S11. Note that the target detection unit 113 may identify, for example, the coordinates of a position other than the center position of the region (rectangular region) in which the first measurement target OB appear among the coordinates in the image data received in the process in S11.

Also, in the process in S12, the target detection unit 113 may generate, for example, information indicating the identified first position (this information will be hereinafter also referred to as the detection result information 131a). In the description below, a specific example of the detection result information 131a is explained.

### [Specific Example of the Detection Result Information]

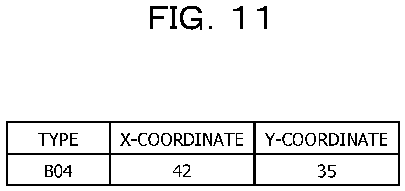

FIG. 11 is a table for explaining a specific example of the detection result information 131a.

The detection result information 131a illustrated in FIG. 11 includes items that are, for example, "type" in which the type of the first measurement target OB is set, "X-coordinate" in which the X-coordinate of the first measurement target OB in the image data is set, and "Y-coordinate" in which the Y-coordinate of the first measurement target OB in the image data is set.

Specifically, in the detection result information 131a illustrated in FIG. 11, for example, "B04" is set as "type", "42" is set as "X-coordinate", and "35" is set as "Y-coordinate".

Referring back to FIG. 7, the feature point group identification unit 114 identifies the identification information (specific identification information) about the imaging device 2 corresponding to a position at which the distance to the first position identified in the process in S12 is equal to or shorter than the first threshold, and the type (specific type) of the measurement target OB, by referring to, for example, the past result information 132 stored in the information storage area 130 (S13).

Specifically, the feature point group identification unit 114 compares, for example, the past result information 132 stored in the information storage area 130 with the detection result information 131a generated by the target detection unit 113, to identify the identification information and the type corresponding to the position at which the distance to the first position identified in the process in S12 is equal to or shorter than the first threshold. In the description below, a specific example of the past result information 132 is explained.

### [Specific Example of the Past Result Information]

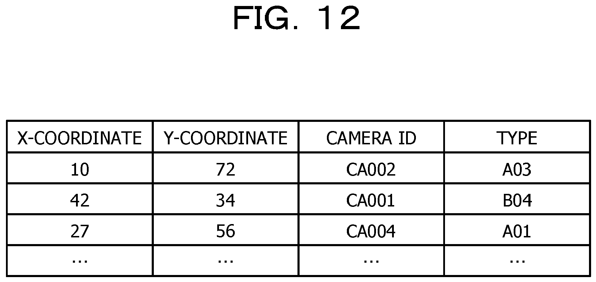

FIGS. 12 to 17 are tables for explaining a specific example of the past result information 132.

The past result information 132 illustrated in FIG. 12 and others includes items that are, for example, "X-coordinate" in which the X-coordinates of the respective measurement targets OB are set, and "Y-coordinate" in which the Y-coordinates of the respective measurement targets OB are set. Also, the past result information 132 illustrated in FIG. 12 and others includes items that are, for example, "camera ID" in which the identification information (camera ID) about the imaging devices 2 that have captured the image data in which the respective measurement targets OB appear, is set, and "type" in which the types of the respective measurement targets OB are set.

Specifically, in the information in the first row in the past result information 132 illustrated in FIG. 12, for example, "10" is set as "X-coordinate", "72" is set as "Y-coordinate", "CA002" is set as "camera ID", and "A03" is set as "type".

Also, in the information in the second row in the past result information 132 illustrated in FIG. 12, for example, "42" is set as "X-coordinate", "34" is set as "Y-coordinate", "CA001" is set as "camera ID", and "B04" is set as "type". Explanation of other information included in FIG. 12 is not made herein.

Here, in the detection result information 131a described with reference to FIG. 11, "42" is set as "X-coordinate", and "35" is set as "Y-coordinate". Meanwhile, in the information in the second row in the past result information 132 described with reference to FIG. 12, "42" is set as "X-coordinate", and "34" is set as "Y-coordinate". Accordingly, in a case where the distance between the position at which "X-coordinate" is "42" and "Y-coordinate" is "35", and the position at which "X-coordinate" is "42" and "Y-coordinate" is "34" is equal to or shorter than the first threshold, for example, the feature point group identification unit 114 identifies, in the process in S13, for example, "CA001" and "B04", which are set in "camera ID" and "type", respectively, in the information in the second row in the past result information 132 described with reference to FIG. 12.

Referring back to FIG. 7, the feature point group identification unit 114 refers to, for example, the imaging position information 134 stored in the information storage area 130, and identifies the identification information about another imaging device 2 at which the distance to the imaging device 2 corresponding to the identification information identified in the process in S13 is equal to or shorter than a second threshold (this identification information will be hereinafter also referred to as the other identification information) (S14). The imaging position information 134 is, for example, information indicating the installation positions (imaging positions) of the respective imaging devices 2. In the description below, a specific example of the imaging position information 134 is explained.

### [Specific Example of the Imaging Position Information]

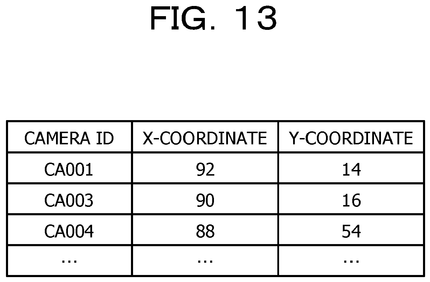

FIG. 13 is a table for explaining a specific example of the imaging position information 134.

The imaging position information 134 illustrated in FIG. 13 includes items that are, for example, "camera ID" in which the identification information (camera ID) about the respective imaging devices 2 is set, "X-coordinate" in which the X-coordinates (X-coordinates in real space) of the installation positions of the respective imaging devices 2 are set, and "Y-coordinate" in which the Y-coordinates (Y-coordinates in real space) of the installation positions of the respective imaging devices 2 are set.

Specifically, in the information in the first row in the imaging position information 134 illustrated in FIG. 13, for example, "CA001" is set as "camera ID", "92" is set as "X-coordinate", and "14" is set as "Y-coordinate".

Also, in the information in the second row in the imaging position information 134 illustrated in FIG. 13, for example, "CA003" is set as "camera ID", "90" is set as "X-coordinate", and "16" is set as "Y-coordinate". Explanation of other information included in FIG. 13 is not made herein.

Here, in the information in the first row in the imaging position information 134 described with reference to FIG. 13, "92" is set as "X-coordinate", and "14" is set as "Y-coordinate". Also, in the information in the second row in the imaging position information 134 described with reference to FIG. 13, "90" is set as "X-coordinate", and "16" is set as "Y-coordinate". Accordingly, in a case where "camera ID" identified in the process in S13 is "CA001", and the distance between the position at which "X-coordinate" is "92" and "Y-coordinate" is "14", and the position at which "X-coordinate" is "90" and "Y-coordinate" is "16" is equal to or shorter than the second threshold, for example, the feature point group identification unit 114 identifies, for example, "CA003" set in "camera ID" in the information in the first row in the imaging position information 134 described with reference to FIG. 13 as the identification information about another imaging device 2 in the process in S14.

Note that, in a case where there is a plurality of other imaging devices 2 at which the distances from the imaging device 2 corresponding to the identification information identified in the process in S13 are equal to or shorter than the second threshold, for example, the feature point group identification unit 114 may identify, in the process in S14, the respective pieces of the identification information corresponding to the plurality of other imaging devices 2 as the other identification information.

Referring back to FIG. 7, the feature point group identification unit 114 stores the first prospect information 135 into the information storage area 130, the first prospect information 135 including, for example, the identification information (specific identification information) about the imaging device 2 and the type (specific type) of the measurement target OB identified in the process in S13, and the identification information (other identification information) about the imaging device 2 identified in the process in S14 (S15). In the description below, a specific example of the first prospect information 135 is explained.

### [Specific Example of the First Prospect Information]

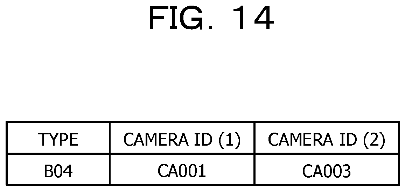

FIG. 14 is a table for explaining a specific example of the first prospect information 135.

The first prospect information 135 illustrated in FIG. 14 includes items that are, for example, "type" in which the type of the measurement target OB identified in the process in S13 is set, "camera ID (1)" in which the identification information about the imaging device 2 identified in the process in S13 is set, and "camera ID (2)" in which the identification information (other identification information) about the imaging device 2 identified in the process in S14 is set.

Specifically, in the first prospect information 135 illustrated in FIG. 14, for example, "B04" is set as "type", "CA001" is set as "camera ID (1)", and "CA003" is set as "camera ID (2)".

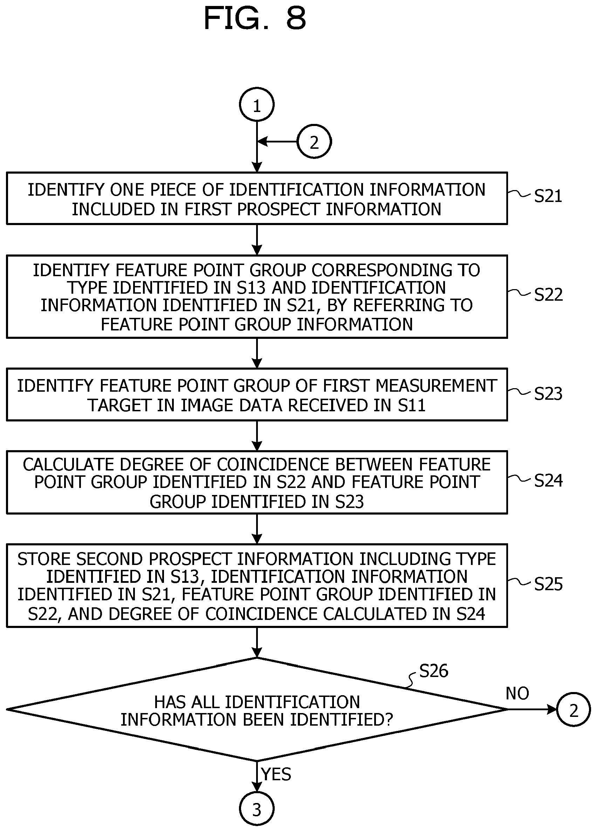

Referring back to FIG. 8, the feature point group identification unit 114 refers to, for example, the first prospect information 135 stored in the information storage area 130, to identify one piece of the identification information about the imaging devices 2 (S21).

Then, the feature point group identification unit 114 then refers to the feature point group information 133 stored in the information storage area 130, for example, and identifies the feature point group corresponding to the type of the measurement target OB identified in the process in S13 and the identification information about the imaging device 2 identified in the process in S21 (S22).

Specifically, in the first to third rows in the feature point group information 133 described with reference to FIG. 10, "A01" is set as "type", "CA001" is set as "camera ID", and "F11", "F12", and "F13" are set as "feature points". Accordingly, in a case where the type identified in the process in S13 is A01, and the identification information about the imaging device 2 identified in the process in S21 is CA001, for example, the feature point group identification unit 114 identifies a feature point group including F11, F12, and F13 as feature points.

Subsequently, the feature point group identification unit 114 identifies, for example, the feature point group of the first measurement target OB in the image data received in the process in S11 (S23). Specifically, the feature point group identification unit 114 may identify, for example, the angle, the gradient of luminance, and the like of the first measurement target OB appearing in the image data received in the process in S11, as the feature point group.

After that, the posture estimation unit 115 calculates, for example, the degree of coincidence between the feature point group identified in the process in S22 and the feature point group identified in the process in S23 (S24).

Specifically, the posture estimation unit 115 may calculate, for example, the average of the degrees of coincidence between the respective feature points included in the feature point group identified in the process in S22 and the respective feature points included in the feature point group identified in the process in S23 as the degree of coincidence between the feature point group identified in the process in S22 and the feature point group identified in the process in S23.

Then, the posture estimation unit 115 then stores the second prospect information 136 into the information storage area 130, the second prospect information 136 including, for example, the type identified in the process in S13, the identification information about the imaging device 2 identified in the process in S21, the feature point group identified in the process in S22, and the degree of coincidence calculated in the process in S24 (S25). In the description below, a specific example of the second prospect information 136 is explained.

### [Specific Example of the Second Prospect Information]

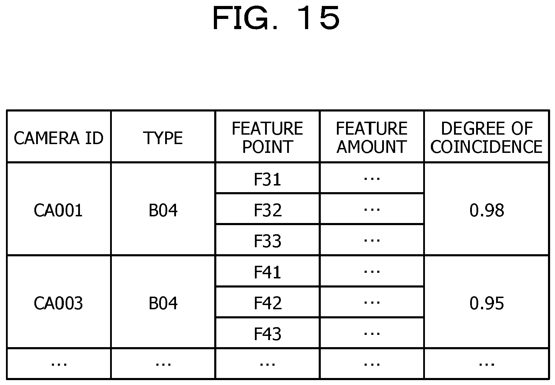

FIG. 15 is a table for explaining a specific example of the second prospect information 136.

The second prospect information 136 illustrated in FIG. 15 includes items that are, for example, "camera ID" in which the identification information about the imaging device 2 identified in the process in S21 is set, "type" in which the type of the measurement target OB identified in the process in S13 is set, "feature point" in which the feature points included in the feature point group identified in the process in S22 are set, "feature amount" in which the feature amounts at the feature points included in the feature point group identified in the process in S22 are set, and "degree of coincidence" in which the degree of coincidence calculated in the process in S24 is set.

Specifically, in the second prospect information 136 illustrated in FIG. 15, for example, in the information in which "camera ID" is "CA001" and "type" is "B04" (the information in the first to third rows), "F31", "F32", and "F33" are set as "feature points", and "0.98" is set as the "degree of coincidence".

Also, in the second prospect information 136 illustrated in FIG. 15, for example, in the information in which "camera ID" is "CA003" and "type" is "B04" (the information in the fourth to sixth rows), "F41", "F42", and "F43" are set as "feature points", and "0.95" is set as the "degree of coincidence". Explanation of other information included in FIG. 15 is not made herein.

Referring back to FIG. 8, the posture estimation unit 115 determines, for example, whether all the pieces of the identification information (the identification devices about the imaging device 2) have been identified in the process in S21 (S26).

As a result, if it is determined that not all the pieces of the identification information have been identified in the process in S21 (NO in S26), the feature point group identification unit 114 and the posture estimation unit 115 again perform the process in S21 and the subsequent steps, for example.

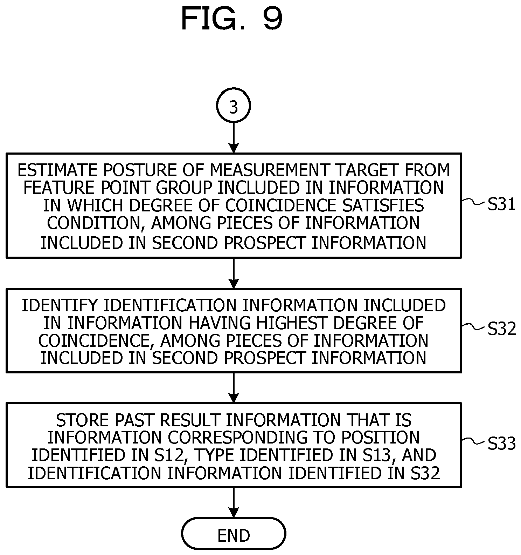

On the other hand, if it is determined that all the pieces of the identification information have been identified in the process in S21 (YES in S26), the posture estimation unit 115 estimates, as illustrated in FIG. 9, the posture of the first measurement target OB from the feature point group included in the information in which the degree of coincidence satisfies a condition (hereinafter also referred to as the third condition), for example, among the pieces of information included in the second prospect information 136 stored in the information storage area 130 (S31).

Specifically, the posture estimation unit 115 estimates, for example, the posture of the first measurement target OB from the feature point group included in a predetermined number of pieces of information having high degrees of coincidence, among the pieces of information included in the second prospect information 136 stored in the information storage area 130.

That is, the second prospect information 136 includes, for example, information that can be determined to have a higher degree of coincidence with the feature point group of the first measurement target OB in the image data received in the process in S11 than other information among the pieces of the information included in the feature point group information 133. Also, the second prospect information 136 includes, for example, information corresponding to the type that can be determined to be the type of the first measurement target OB in the image data received in the process in S11 (the type identified in the process in S13), among the pieces of the information included in the feature point group information 133.

Accordingly, in the information processing device 1 according to this embodiment, for example, the feature point group to be used in estimating the posture of the first measurement target OB is identified from the second prospect information 136 stored in the information storage area 130, so that the posture of the first measurement target OB can estimated more efficiently than in a case where the feature point group to be used in estimating the posture of the first measurement target OB is identified from the feature point group information 133 stored in the information storage area 130.

As a result, in the information processing device 1 according to this embodiment, the time required for estimating the posture of the first measurement target OB can be shortened, for example. Specifically, even in a case where, for example, the number of types of measurement targets OB is large, a case where a plurality of measurement targets OB of the same type exists, a case where the shapes of the measurement targets OB are diverse, or the like, the information processing device 1 can estimate the posture of the first measurement target OB in real time.

Note that the posture estimation unit 115 may use a technique such as homography transformation, for example, to estimate the posture of the first measurement target OB from the feature point group included in the information in which the degree of coincidence satisfies the condition among the pieces of the information included in the second prospect information 136. Alternatively, the posture estimation unit 115 may estimate, for example, three-dimensional coordinates in real space as the position of the first measurement target OB.

Further, in the process in S31, the posture estimation unit 115 may generate, for example, the estimation result information 137 indicating the result of the estimation of the posture of the first measurement target OB, and store the estimation result information 137 into the information storage area 130. Furthermore, the posture estimation unit 115 may transmit the generated estimation result information 137 to the tracking processing unit 12, for example. In the description below, a specific example of the estimation result information 137 is explained.

### [Specific Example of the Estimation Result Information]

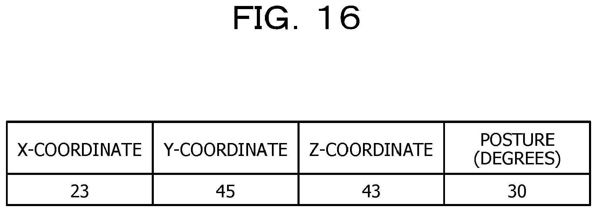

FIG. 16 is a table for explaining a specific example of the estimation result information 137.

The estimation result information 137 illustrated in FIG. 16 includes items that are, for example, "X-coordinate" in which the result of estimation of the X-coordinate (X-coordinate in real space) of the first measurement target OB is set, "Y-coordinate" in which the result of estimation of the Y-coordinate (Y-coordinate in real space) of the first measurement target OB is set, and "Z-coordinate" in which the result of estimation of the Z-coordinate (Z-coordinate in real space) of the first measurement target OB is set. Also, the estimation result information 137 illustrated in FIG. 16 includes an item that is, for example, "posture" in which an angle of rotation about the Z-axis is set as the posture of the first measurement target OB.

Specifically, in the estimation result information 137 illustrated in FIG. 16, for example, "23" is set as the "X-coordinate", "45" is set as the "Y-coordinate", "43" is set as the "Z-coordinate", and "30 (degrees)" is set as "posture".

Referring back to FIG. 9, the posture estimation unit 115 identifies, for example, the identification information about the imaging device 2 included in the information having the highest degree of coincidence, among the pieces of the information included in the second prospect information 136 stored in the information storage area 130 (S32).

Then, the posture estimation unit 115 then stores the past result information 132 into the information storage area 130, the past result information 132 being, for example, information in which the position identified in the process in S12, the type of the measurement target OB identified in the process in S13, and the identification information about the imaging device 2 identified in the process in S32 are associated with each other (S33).

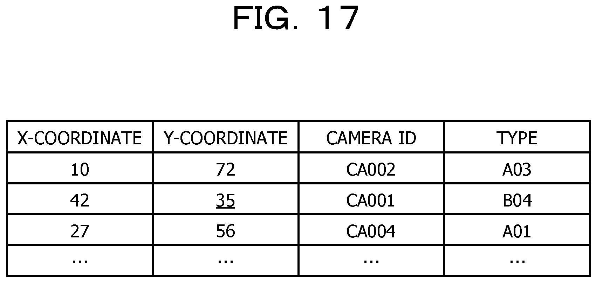

Specifically, in a case where the X-coordinate identified in the process in S12 is 42 while the Y-coordinate is 35, the type of the measurement target OB identified in the process in S13 is B04, and the identification information about the imaging device 2 identified in the process in S32 is CA001, for example, the posture estimation unit 115 updates "Y-coordinate" in the information whose "type" is "B04" (the information in the second row) among the pieces of the past result information 132 (the past result information 132 described in FIG. 10) stored in the information storage area 130, to "35", for example, as illustrated in the underlined portion in FIG. 17.

Note that, in the process in S32, the posture estimation unit 115 may identify, for example, the identification information about the imaging devices 2 included in a predetermined number of pieces (a plurality of pieces) of information having higher degrees of coincidence, among the pieces of the information included in the second prospect information 136 stored in the information storage area 130. Then, in the process in S33, the posture estimation unit 115 may generate, for example, new past result information 132 for each piece of the identification information identified in the process in S32, and store the new past result information 132 into the information storage area 130.

In this manner, the information processing device 1 according to this embodiment identifies, for example, the first position of the first measurement target OB in the image data received from the imaging devices 2. Then, the information processing device 1 then refers to, for example, the information storage area 130 storing the past result information 132 in which the positions of the respective measurement targets OB, the identification information about the imaging devices 2 that have captured the image data in which the respective measurement targets OB appear, and the types of the respective measurement targets OB are associated with each other, and identifies the specific identification information and the specific type corresponding to the specific position at which the positional relationship with the first position satisfies the first condition.

Subsequently, the information processing device 1 refers to, for example, the information storage area 130 storing the feature point group information 133 in which the identification information about the imaging devices 2 that have captured image data in which the respective measurement targets OB appear, the types of the respective measurement targets OB, and the feature point groups of the respective measurement targets OB in the image data in which the respective measurement targets OB appear, are associated with each other, and identifies the specific feature point group corresponding to the specific identification information and the specific type. After that, the information processing device 1 estimates the posture of the first measurement target OB from the specific feature point group, for example.

That is, it can be determined that the position (for example, the current position) of the first measurement target OB is highly likely to be a position close to the position (for example, the previously estimated position) estimated in the past as the position of the first measurement target OB, in accordance with, for example, the operation speed of the first measurement target OB or the like.

Therefore, in a case where the posture of each measurement target OB is estimated, for example, the information processing device 1 according to this embodiment generates the past result information 132 by associating the identification information about the imaging devices 2 that have captured video data including the feature point groups used in estimating the postures of the respective measurement targets OB with the positions of the respective measurement targets OB and the types of the respective measurement targets OB, and accumulates the past result information 132 in the information storage area 130.

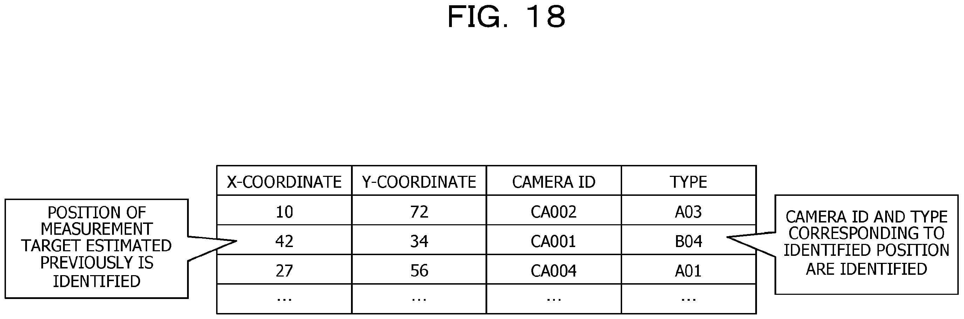

Then, as illustrated in FIG.18, in a case where the posture of the first measurement target OB is estimated, for example, the information processing device 1 refers to the information storage area 130 storing the past result information 132, and identifies the imaging device 2 corresponding to the position at which the positional relationship with the position of the first measurement target OB satisfies the first condition and the type of the first measurement target OB, to identify the imaging device 2 corresponding to the feature point group used in estimating the posture of the first measurement target OB in the past (for example, at the time of the previous estimation) and the type of the first measurement target OB. After that, the information processing device 1 refers to the information storage area 130 storing the feature point group information 133, for example, and identifies the feature point group corresponding to the identified imaging device 2 and the identified type of the first measurement target OB. Further, the information processing device 1 estimates, for example, the posture of the first measurement target OB, using the identified feature point group.

As a result, when estimating the posture of the first measurement target OB, for example, the information processing device 1 according to this embodiment no longer needs to match the combination of the type of the first measurement target OB and the feature point group with all the combinations of the types of the measurement targets OB and the feature point groups included in the feature point group information 133. Thus, the information processing device 1 can reduce the processing load accompanying the estimation of the posture of the first measurement target OB.

In any of the above aspects, the various features may be implemented in hardware, or as software modules running on one or more processors/computers.

The invention also provides a computer program or a computer program product comprising instructions which, when executed by a computer, cause the computer to carry out any of the methods/method steps described herein, and a non-transitory computer-readable (storage) medium comprising instructions which, when executed by a computer, cause the computer to carry out any of the methods/method steps described herein. A computer program embodying the invention may be stored on a non-transitory computer-readable medium, or it could, for example, be in the form of a signal such as a downloadable data signal provided from an Internet website, or it could be in any other form.

## Claims

1. A position measuring program comprising instructions which when executed by a computer, cause the computer to perform processing comprising:
identifying a first position of a first measurement target in image data received from an imaging device;
identifying specific identification information and a specific type that correspond to a specific position at which a positional relationship with the first position satisfies a first condition, by referring to a first storage device coupled to the computer, the first storage device being configured to store a position of each measurement target, identification information on the imaging device that has captured the image data in which each measurement target appears, and a type of each measurement target, in association with each other;
identifying a specific feature point group that correspond to the identified specific identification information and the identified specific type, by referring to a second storage device coupled to the computer, the second storage device being configured to store the identification information on the imaging device that has captured the image data in which each measurement target appears, the type of each measurement target, and a feature point group of each measurement target in the image data in which each measurement target appears, in association with each other; and
estimating a posture of the first measurement target from the identified specific feature point group.

2. The position measuring program according to claim 1, wherein
the identifying of the specific identification information and the specific type includes identifying, as the specific position, a position at which a distance to the first position is equal to or shorter than a first threshold.

3. The position measuring program according to claim 1 or 2, the processing further comprising:
identifying another imaging device at which a positional relationship with the imaging device that corresponds to the identified specific identification information satisfies a second condition; and
identifying, by referring to the second storage device, another feature point group that corresponds to the identification information on the identified another imaging device and the specific type, wherein
the estimating includes estimating, from the specific feature point group and the another feature point group, the posture of the first measurement target.

4. The position measuring program according to claim 3, wherein
the identifying of the another imaging device includes identifying, as the another imaging device, an imaging device at which a distance to the imaging device that corresponds to the specific identification information is equal to or shorter than a second threshold.

5. The position measuring program according to any of the preceding claims, wherein
the identifying of the first position includes receiving a feature point group of the first measurement target in image data in which the first measurement target appears, and
the estimating of the posture includes estimating the posture of the first measurement target from a feature point group in which a degree of coincidence with the received feature point group of the first measurement target satisfies a third condition in the specific feature point group.

6. The position measuring program according to any of the preceding claims, the processing further comprising:
storing the first position, the identification information on the imaging device that has captured the image data in which the specific feature point group appears, and the type of the first measurement target into the first storage device, in association with each other.

7. An information processing device comprising:
a target detection unit configured to identify a first position of a first measurement target in image data received from an imaging device;
a feature point group identification unit configured to:
identify specific identification information and a specific type that correspond to a specific position at which a positional relationship with the first position satisfies a first condition, by referring to a first storage device coupled to the information processing device, the first storage device being configured to store a position of each measurement target, identification information on the imaging device that has captured the image data in which each measurement target appears, and a type of each measurement target, in association with each other, and
identify a specific feature point group that corresponds to the identified specific identification information and the identified specific type, by referring to a second storage device coupled to the information processing device, the second storage device being configured to store the identification information on the imaging device that has captured the image data in which each measurement target appears, the type of each measurement target, and a feature point group of each measurement target in the image data in which each measurement target appears, in association with each other; and
a posture estimation unit configured to estimate a posture of the first measurement target from the identified specific feature point group.

8. A position measuring method implemented by a computer, the position measuring method comprising:
identifying a first position of a first measurement target in image data received from an imaging device;
identifying specific identification information and a specific type that correspond to a specific position at which a positional relationship with the first position satisfies a first condition, by referring to a first storage device coupled to the computer, the first storage device being configured to store a position of each measurement target, identification information on the imaging device that has captured the image data in which each measurement target appears, and a type of each measurement target, in association with each other;
identifying a specific feature point group that correspond to the identified specific identification information and the identified specific type, by referring to a second storage device coupled to the computer, the second storage device being configured to store the identification information on the imaging device that has captured the image data in which each measurement target appears, the type of each measurement target, and a feature point group of each measurement target in the image data in which each measurement target appears, in association with each other; and
estimating a posture of the first measurement target from the identified specific feature point group.

9. A non-transitory computer-readable storage medium having the position measuring program of any of claims 1 to 6 stored thereon.
